# EUROPEAN PATENT APPLICATION

(11) **EP 0 897 863 A2**
(43) Date of publication of application: **24.02.1999**
(21) Application number: 98306145.8
(22) Date of filing: 31.07.1998
(51) Int. Cl.: B64G 1/42, F02M 37/22

(54) **Filter assemblies and vehicles incorporating filter elements**

(30) Priority: 01.08.1997 GB 9716379
(71) Applicant: Pall Corporation, East Hills, New York 11548 (US)
(72) Inventor: Stallard, Paul, Waterlooville, Hampshire, P07 6ND (GB)
(74) Representative: Knott, Stephen Gilbert

(57) **Abstract**

A vehicle, such as a missile, includes a propulsion unit (44) and a fuel system (42,45,10,43) supplying fuel to the propulsion unit (44). The fuel system (42,45,10,43) includes a filter assembly (10) through which the fuel passes to the propulsion unit (44). The filter assembly (10) includes a filter element (12) having a first bubble point with the fuel sufficient to prevent the passage of gas through the element (12) when the fuel and a gas are passed to the filter element (12) and the vehicle is subjected to accelerations of between ± 1g and ± 10g. The first bubble point will generally be at least 40 mbar. The element helps to prevent the passage of gas to the propulsion unit so as to maximise the amount of fuel passed to the unit (44) before operation of the unit (44) is affected by air.

## Description

The invention relates to vehicles incorporating filter elements and to filter assemblies suitable for incorporation in such vehicles.

The function of a filter assembly is to receive fluid from a supply, filter the fluid using a filter element and then pass the filtered fluid to equipment that utilizes the fluid. Where the fluid is a liquid, it can be important to ensure that the filtered liquid leaving the assembly contains the minimum possible amount of gas, since the presence of such gas can affect adversely the downstream equipment.

The ability of a filter element in a filter assembly to prevent the breakthrough of gas can be affected adversely by the dynamics of a system in which the assembly is incorporated. For example, a filter assembly incorporated in a missile will be subjected to high accelerations and this will tend to encourage gas breakthrough.

According to a first aspect of the invention, there is provided a vehicle including a propulsion unit and a fuel system supplying fuel to the propulsion unit, the fuel system including a filter assembly through which the fuel passes to the propulsion unit, the filter assembly including a filter element having a first bubble point with the fuel sufficient to prevent the passage of gas through the filter element when the fuel and a gas are passed to the filter element and the vehicle is subjected to accelerations of up to ±1g, preferably up to ±2g, more preferably up to ±5g and most preferably up to and ±10g.

According to a second aspect of the invention there is provided a vehicle including a propulsion unit and a fuel system supplying fuel to the propulsion unit, the fuel system including a filter assembly through which the fuel passes to the propulsion unit, the filter assembly including a filter element having a first bubble point with the fuel of at least 40 mbar.

According to a third aspect of the invention there is provided a vehicle including a propulsion unit and a fuel system for supplying a fuel to the propulsion unit, the fuel system including a filter assembly through which the fuel passes to the propulsion unit, the filter assembly including a filter element having a first bubble point with JP-10 fuel of at least 40 mbar.

According to a fourth aspect of the invention there is provided a method of operating a vehicle including a fuel tank, a filter element and a propulsion unit comprising supplying a fuel from the fuel tank via the filter element to the propulsion unit, the filter element being wetted by the fuel, the propulsion unit utilising the fuel to propel the vehicle, wherein while the vehicle is subjected to an acceleration of greater than ±1g an upstream surface of the filter element is contacted by a gas and the filter element remains wetted with the fuel so as to prevent substantial passage of the gas through the filter element.

It can also be a requirement of filter assemblies that they maximize the amount of liquid that passes from the filter so that when the downstream equipment no longer functions through lack of filtered fluid, there is not a significant quantity of liquid within the filter assembly. An example of a system where this is a particular problem is an engine driven by fuel filtered by the filter assembly. When sufficient fuel no longer reaches the engine, it will halt. This can be a particular problem where the amount of fuel available is limited, such as a missile.

According to a further aspect of the invention, there is provided a filter assembly comprising a housing having an inlet and an outlet and filter element arranged between the inlet and the outlet, a flow assembly being provided between a downstream surface of the filter element and the outlet for passing fluid from said filter element to said outlet, the flow assembly having such cross-sectional shape along the length thereof as to provide a generally constant fluid flow velocity along said assembly.

The flow assembly improves the liquid utilization by reducing the downstream volume.

The following is a more detailed description of an embodiment of the invention, by way of example, reference being made to the accompanying drawings in which:-
Figure 1 is a cross-sectional view through a surface tension filter assembly for use in a guided missile, and
Figure 2 is a schematic view of the surface tension filter assembly of Figure 1 installed in the fuel system of a missile.
Referring first to Figure 1, the surface tension filter assembly 10 comprises a casing 11 containing a filter element 12 and a downstream flow assembly 13.

The casing 11 may be made of any suitable material, for example, metal or plastics. The casing comprises a flat base 14 surrounded by an annular wall 15. The open end of the annular wall 15 is closed by a lid 16 which is connected to the upper edge of the annular wall 15 by any suitable means such as bolts 17. The lid 16 is provided with a fuel inlet 18.

A plurality of mounting support ribs 19 are located within the casing 11 at the junction between the annular wall 15 and the base 14 and lie in respective planes including the axis 20 of the casing 11. The support ribs are equi-angularly spaced around the casing 11. Each support rib is provided with an L-shaped step 21 for receiving a lower edge of the filter element 12 in a manner to be described below.

An outlet tube 23 leads from the base 14 and is connected to the flow assembly 13 in a manner to be described below.

The filter element 12 is formed by an annulus 24 of filter material with the axially spaced ends of the filter material 24 closed by respective end caps 25. The filter material is formed from a fine filter medium of non-woven glass fibre or polymeric fibre or membrane with a high first bubble point in the fluid to be filtered. The first bubble point may, for example, be between 40 to 500 mbar, preferably between 70 to 500 mbar. The filter material 24 is preferably pleated.

The "first bubble point" is measured using any suitable known standard technique such as those defined by U.S. Standard ARP 901 or British Standard IS0 2942 - 1994, at 20°C, and references to numerical valves of "first bubble point" in this specification are references to first bubble point measured accordingly.

The material is provided with support and drainage layers 26,27 which may be of woven or non-woven material and this assembly is formed into a pleated pack.

Each end cap 25 includes an annular wall 28 which covers an associated axial end of the material 24 and a pair of annular side flanges 29 that extend for a short distance over respective opposite radially inner and outer annular surfaces of the filter material 24. An edge of the end cap 25 adjacent the base 14 rests in the steps 21 of the casing support ribs 19 to position the filter element 12 in the casing 11 with the axis of the filter element 12 co-axial with the axis of the casing 11.

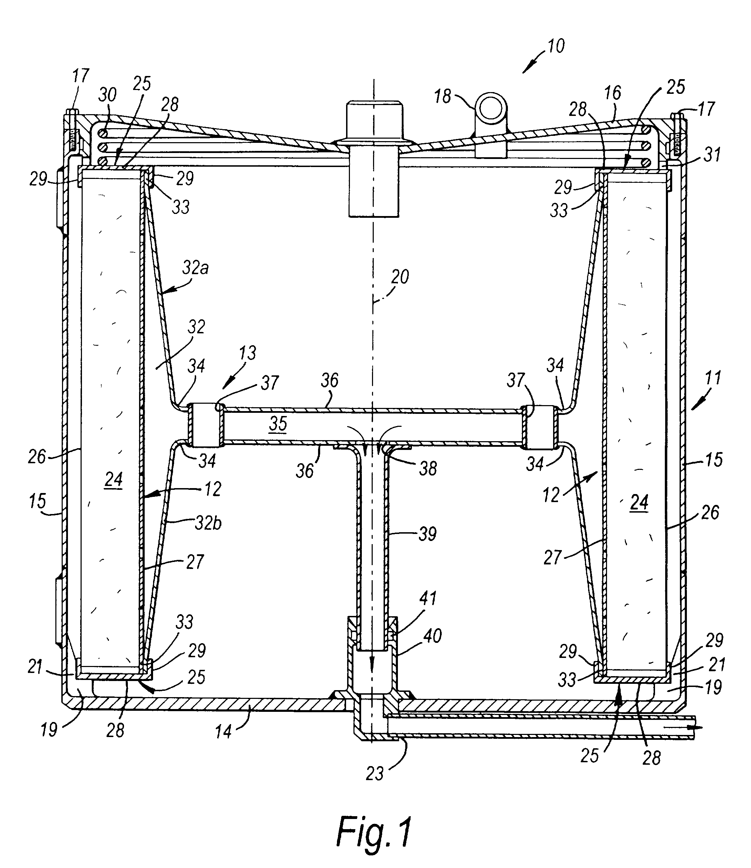

As seen in Figure 1, a spring 30 is compressed between the lid 16 and the adjacent end cap 25 to force the filter element 12 into engagement with the casing support ribs 19. When so positioned, there are flow slots 31 formed in the lid 16 and providing a fluid passage between the end cap 25 and the lid 16. This is to allow fluid flow around the filter element 12 in a manner to be described below.

The flow assembly 13 comprises a tapered annular plenum 32 adjacent the downstream surface of the filter material 24. The plenum 32 is formed by a pair of annular walls 32a,32b. Each wall 32a,32b extends from a respective edge of the filter element 12. The walls 32a,32b thus converge towards one another. Each wall 32a,32b has a larger diameter edge 33 and a smaller diameter edge 34. As seen in Figure 1, the angle between the walls 32a,32b is thus significantly greater than 90°; typically 160°-170°. This means that the plenum 32 has a comparatively small volume in comparison with the volume of the casing 11 and provides a flow path designed to minimise downstream volume and provide generally constant fluid flow velocity in the direction of flow.

Each wider diameter edge 33 is bonded between a flange 29 of an associated end cap 25 and the drainage layer 27. The smaller diameter edges 34 are axially spaced to provide an annular outlet from the plenum 32.

The flow assembly 13 also comprises a flow channel 35 leading from the outlet formed between the smaller diameter edges 34 of the plenum 32. The flow channel 35 is formed by a pair of axially spaced disc-like members 36 each connected to a respective smaller diameter edge 34 of the plenum 32 and lying in respective spaced planes normal to the axis 20. A plurality of passages 37 of circular cross-section extend through the flow channel 35 in a direction parallel to the axis 20 so providing communication between one side of the flow channel 35 and the other side. The passages 37 are adjacent the smaller diameter edges 34 of the plenum 32 and are spaced angularly around the flow channel 35.

The disc-like member 36 of the flow channel 35 remote from the lid 16 is provided with a central outlet 38 which is coaxial with the axis 20. A tube 39 leads from this outlet 38 and fits into an outlet fitting 40 carried on the base 14 and in fluid communication with the outlet tube 23. As seen in Figure 1, the tube 39 extends into the outlet fitting 40 where it is engaged by an annular seal 41.

As will be seen from Figure 1, the casing 11 has a diameter that is similar to its axial length. The same is true of the filter assembly 12. In addition, the flow channel 35 is located generally mid-way between the axial ends of the filter element 12 and the tube 39 is co-axial with the casing axis 20. The significance of this disposition will be discussed below.

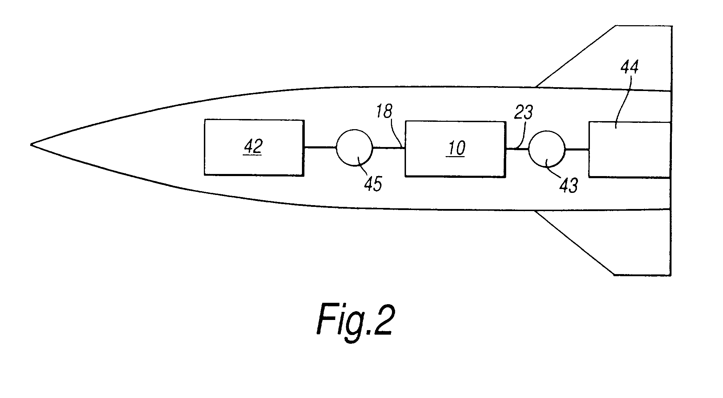

The surface tension filter assembly 10 forms part of a fuel system for a missile shown schematically in Figure 2. Fuel from a tank 42 is pumped by a pump 45 to the fuel inlet 18 and fuel from the filter assembly 10 leaves via the outlet tube 23 to a pump 43 which supplies the fuel to a motor 44. It will be appreciated that one of the requirements of missile design is to minimize the weight of the missile while maximizing its range. In order to achieve this, it is necessary to utilize all, or as much as possible, of the fuel in the tank 42. Another requirement is that all the equipment, including the surface tension filter assembly 10, must be capable of withstanding significant g-forces. For example, the accelerations normally encountered in flight, which may be up to between 1g and 10g in any direction (for example, up to 1, 2, 3, 4, 5, 6, 7, 8, 9 or 10g in any direction), may be experienced.

The purpose of the filter described above with reference to Figures 1 and 2 is to provide this performance. This is achieved in the following way.

Fuel entering the casing 11 through the fuel inlet 18 fills the casing 11 passing through the gaps 31 and around the casing support ribs 19 to reach the upstream surface of the filter material 24. The filter material 24 is readily wettable with the fuel so as to maintain a fluid film over the entire area. The fuel is filtered through the filter material 24 and leaves via the plenum 32, the flow channel 35, the tube 39 and the outlet tube 23. It then passes to the pump 43 and the motor 44 as described above.

The amount of fuel that can be utilized by the motor 44 is maximized by the wettability and the high bubble pressure of the filter material 24 with the fuel. The surface tension forces in the fuel within the filter material are sufficient to hold fuel within the filter element so as to keep the element wetted and thereby prevent the passage of air or gas through the filter element but allow free flow of the fuel through the filter element. Plainly, as soon as air begins to pass through the filter material 24 and reaches the outlet 23, operation of the motor 44 is likely to be affected adversely.

The filter element 12 is designed to be of minimum size to meet specified flow/pressure drop and acceleration requirements for a given system liquid and temperature range. This is determined at least in part by the maximum viscosity of the fuel which may occur at a temperature of -54°C. Then the downstream volume is minimised while retaining constant or generally constant fluid flow velocity. This produces a very much larger volume upstream of the filter material 24 than downstream of the filter material 24. This volume may, for example, be between 5 and 20 litres. This is useful when there is high negative g. On such an occurrence, only air may be passed to the filter so that the motor 44 may use only fuel stored in the casing 10. This requirement may continue for 20-30 seconds. The plenum 32, the flow channel 35 and the tube 39 and outlet tube 23 are all of small volume compared with the internal volume of the casing 11 and thus allow maximum fuel utilization.

The shape of the plenum 32 is designed to maintain constant fluid velocity and this also helps ensure maximum fuel utilization.

The arrangement of the filter element 12 within the casing 11 allows free movement of the fuel around the filter element 12 within the casing 11. This minimizes air pockets during system filling and maximizes the fluid flow area when there are fuel/air mixtures or air only at the fuel inlet 18. Further, the design of the plenum 32 ensures that the initial passage of air through the filter element 12 will collect in the plenum 32 and will not pass to the outlet tube 23 until a considerable volume of air is accumulated. This prevents air contaminating the fuel for a significant length of time.

The high bubble pressure of the filter material 24 with the fuel also helps the filter material prevent air breakthrough at high acceleration g-forces. As mentioned above, the filter material 24 can have a first bubble point between 40 to 500 mbar, preferably between 70 to 500 mbar, with the system fluid. For example, 4g acceleration acting on a 100mm column of a fluid having a density of 1 causes 40 mbar pressure and so any filter material having the first bubble point below that figure will allow the passage of air through the filter when air contacting the material is acted on by a column of the fluid of 100mm or more subject to such acceleration (in the absence of pressure losses due to fluid flow).

In practice the use of a filter element having a first bubble point with the fuel of at least 40mbar has been found to be preferable. One suitable fuel is JP-10 fuel (a kerosene based missile fuel having a surface tension of 35mN/m at 20°C

The first bubble point is preferably sufficient to prevent gas breakthrough though the filter element over the range of acceleration to which the missile will be subjected. The first bubble point is affected by temperature. Hence, the filter element material is preferably chosen (for a particular fuel) so that the first bubble point over a relatively large range of temperatures (the temperatures at which the filter element might filter fuel in operation) is sufficient to prevent gas breakthrough over the range of acceleration to which the missile will be subjected. The temperature range may be -40°C to +70°C or even -54°C to +70°C.

There are other features of the surface tension filter 10 that also assist in resisting the adverse effects of high accelerations (both positive and negative). The mid-location of the flow channel 35 ensures that, whatever the direction of acceleration forces, this position will delay the passage of air to the outlet tube 23 under flight manoeuvre conditions.

By having the overall diameter of the filter element 12 generally equal to its axial length, the filter is provided with resistance to air breakthrough when the filter is rotated about an axis normal to the axis 20. In this case, and with fuel only partially filling the casing 11 as the fuel is nearly consumed, the column length of the part of the filter element 12 not covered by fuel is sufficiently short to prevent air breakthrough.

The length/diameter ratio of the filter element 12 need not be 1, it could be up to 3. The filter material 24 need not be in the form of a tube, it could be oval or conical or flat.

More than one of the filters described above with reference to the drawings could be used. For example, three such filters in parallel could be used. The filter or filters may be located in the fuel tank.

The flow channel 35 formed by a pair of spaced disc-like members 36 may be replaced by suitable tubing. This avoids the need for the passages 37.

It will be appreciated that the filter assembly described above with reference to the drawings is not solely suitable for use in a missile. It may be used in any application and in particular any kind of vehicle whether aeronautical or astronautical or terrestrial or nautical. The term "vehicle" is to be interpreted accordingly.

## Claims

1. A vehicle including a propulsion unit (44) and a fuel system (42,45,10,43) supplying fuel to the propulsion unit (44), the fuel system including a filter assembly (10) through which the fuel passes to the propulsion unit (44), the filter assembly (10) including a filter element (12) having a first bubble point with the fuel sufficient to prevent the passage of gas through the filter element (12) when the fuel and a gas are passed to the filter element (12) and the vehicle is subjected to accelerations of up to ±1g, preferably up to ±2g, more preferably up to ±5g and most preferably up to ±10g.

2. A vehicle according to claim 1 wherein the filter element (12) has a first bubble point with the fuel of at least 40 mbar.

3. A vehicle including a propulsion unit (44) and a fuel system (42,45,10,43) supplying fuel to the propulsion unit (44), the fuel system including a filter assembly (10) through which the fuel passes to the propulsion unit (44), the filter assembly (10) including a filter element (12) having a first bubble point with the fuel of at least 40 mbar.

4. A vehicle according to any preceding claim wherein the filter element (12) has a first bubble point with the fuel of at least 70 mbar.

5. A vehicle according to any preceding claim wherein the filter element (12) has a first bubble point with the fuel of no greater than 500 mbar.

6. A vehicle including a propulsion unit (44) and a fuel system (42, 45, 10, 43) for supplying a fuel to the propulsion unit (44), the fuel system (42, 45, 10, 43) including a filter assembly (10) through which the fuel passes to the propulsion unit (44), the filter assembly including a filter element (12) having a first bubble point with JP-10 fuel of at least 40mbar.

7. A vehicle according to claim 6, wherein the first bubble point is at least 70mbar.

8. A vehicle according to claim 6 or claim 7 wherein the first bubble point is no greater than 500mbar.

9. A vehicle according to any preceding claim wherein the filter element (12) is formed from non-woven glass fibres or polymeric fibres or membrane.

10. A vehicle according to any preceding claim wherein the filter element (12) is hydrophilic.

11. A vehicle according to any preceding claim wherein the filter element (12) is annular.

12. A vehicle according to claim 11 wherein said annular filter element (12) has a ratio of length to diameter of less than 3.

13. A vehicle according to any preceding claim wherein the filter element (12) is incorporated in a housing (11) having a flow path leading through the housing (11) from an inlet (18) to an outlet (23), the filter element (12) being arranged in said flow path, the flow path having an upstream portion leading from the inlet (18) to an upstream surface of the filter element (12) and a downstream portion leading from a downstream surface of the filter element (12) to the outlet (23), the volume of the upstream portion being greater than the volume of the downstream portion.

14. A vehicle according to claim 13 wherein said downstream portion includes a plenum (32) leading from the downstream surface of the filter element (12), said plenum (32) having such a cross-sectional shape along the length thereof as to provide a generally constant liquid flow velocity along the said assembly (10).

15. A vehicle according to claim 14 wherein the plenum (32) is formed by two walls (32a,32b), each wall (32a,32b) having a larger diameter edge (33) connected to the filter element (12) and a smaller diameter edge (34), the smaller diameter edges (34) of the walls (32a,32b) being spaced to provide an annular outlet from the plenum (32).

16. A vehicle according to claim 14 or claim 15 and including a flow channel (35) arranged downstream of the plenum (32).

17. A vehicle according to claim 16 when dependent on claim 15 wherein said flow channel (35) is formed by a pair of axially spaced disc-like members (36) each connected to a respective smaller diameter edge (34) of the plenum (32) and lying in respective planes normal to the axis (20) of the filter element (12).

18. A vehicle according to claim 17 wherein a plurality of passages (37) extend through the flow channel (35) in respective directions parallel to the axis (20) of the filter element (12) to provide communication of the upstream liquid between one side of the flow channel (35) and the other side of the flow channel (35).

19. A vehicle according to claim 17 or claim 18 wherein the downstream portion of the flow path includes an outlet tube (39) extending from an outlet in the flow channel (35) coaxial with the axis (20) of the filter element (12), the outlet tube (39) also being coaxial with the axis (20) of the filter element (12) and leading to an outlet (23) in the housing (11).

20. A vehicle according to any preceding claim wherein the housing (11) comprises a base (14) and an annular wall (15) extending around the base (14), the casing having a length/diameter ratio between 1/1 and 3/1.

21. A method of operating a vehicle including a fuel tank (42) a filter element (12) and a propulsion unit (44) comprising supplying a fuel from the fuel tank (42) via the filter element (12) to the propulsion unit (44), the filter element (12) being wetted by the fuel, the propulsion unit (44) utilising the fuel to propel the vehicle, wherein while the vehicle is subjected to an acceleration of greater than ±1g an upstream surface of the filter element is contacted by a gas and the filter element remains wetted with the fuel so as to prevent substantial passage of the gas through the filter element.

22. A method according to claim 21 wherein the acceleration is greater than ±2g, preferably greater than ±5g and most preferably greater than ±7g.

23. A filter assembly comprising a housing (11) having an inlet (18) and an outlet (23) and an annular filter element (12) arranged between the inlet (18) and the outlet (23), a flow assembly being provided between a downstream surface of the filter element (12) and the outlet (23) for passing fluid from said filter element (12) to said outlet (23), the flow assembly having such a cross-sectional shape along the length thereof as to provide a generally constant liquid flow velocity along the said assembly.
